# EUROPÄISCHE PATENTSCHRIFT

(11) **EP 1 652 283 B1**
(45) Veröffentlichungstag und Bekanntmachung des Hinweises auf die Patenterteilung: **22.04.2009**
(21) Anmeldenummer: 04738579.4
(22) Anmeldetag: 29.05.2004
(51) Int. Cl.: H02K 7/116, H02K 5/08

(54) **GETRIEBE-ANTRIEBSEINHEIT**
DRIVE UNIT FOR A GEAR MECHANISM
UNITE D'ENTRAINEMENT A ENGRENAGE

(30) Priorität: 29.07.2003 DE 10334611
(43) Veröffentlichungstag der Anmeldung: 03.05.2006
(73) Patentinhaber: ROBERT BOSCH GMBH, 70442 Stuttgart (DE)
(72) Erfinder: LAMPERT, Rico, 77880 Sasbach (DE); TASCH, Franz, 76287 Rheinstetten (DE); HAUSSECKER, Walter, 77830 Buehlertal (DE); RAECKE, Mathis, 76131 Karlsruhe (DE); KURZMANN, Rainer, 77855 Achern (DE); FROEHLICH, Peter, 76133 Karlsruhe (DE)
(86) Internationale Anmeldenummer: PCT/DE2004/001110
(87) Internationale Veröffentlichungsnummer: WO 2005/015709

(56) Entgegenhaltungen:
- EP-A- 0 176 839
- GB-A- 1 596 374
- GB-A- 2 030 009
- US-A- 4 420 703
- PATENT ABSTRACTS OF JAPAN Bd. 1998, Nr. 03, 27. Februar 1998 (1998-02-27) & JP 09 308188 A (TOKYO PARTS IND CO LTD; DENSO CORP), 28. November 1997 (1997-11-28)

## Beschreibung

### Stand der Technik

Die Erfindung betrifft eine Getriebe-Antriebseinheit mit einem mehrteiligen Gehäuse nach der Gattung des unabhängigen Anspruchs 1.

Mit der EP 0 474 904 B1 ist ein Kraftfahrzeug-Fensterheberantrieb bekannt geworden, bei dem in einem einstückigen Basisgehäuse die Elektronik, das Getriebe und der verlängerte Teil der Motorwelle eines Kommutatormotors angeordnet ist. Der Motor weist ein topfförmiges Motorgehäuse mit einer offenen Stirnseite auf, die mit dem Basisgehäuse verschraubt wird. Nach der Montage des Kommutatormotors axial zu dessen Ankerwelle kann nach radialer Montage der übrigen Bauteile das Basisgehäuse mit einem Deckel in Montagerichtung (radial zur Ankerwelle) verschlossen werden. Eine solche Antriebseinheit hat den Nachteil, dass bei deren Montage bestimmte Bauteile, wie beispielsweise der Kommutatormotor, axial zur Ankerwelle und andere Bauteile, wie beispielsweise das Getriebe, die Elektronik, radial zur Ankerwelle montiert werden. Außerdem müssen schon während der Montage der einzelnen Bauteile das Basisgehäuse und das Motorgehäuse miteinander verschraubt werden, wodurch solch eine Antriebseinheit prozesstechnisch aufwändig herzustellen ist.

Mit der GB 15 96 374 ist eine Antriebseinheit bekannt geworden, bei der ein Elektromotor mit Permanentmagneten innerhalb von Gehäusehalbschalen angeordnet ist, wobei die Gehäuseschalen aus Stahlblech gefertigt sind und die Funktion eines magnetischen Rückschlusses übernehmen.

### Vorteile der Erfindung

Die erfindungsgemäße Getriebe-Antriebseinheit mit den kennzeichnenden Merkmalen des unabhängigen Anspruchs hat den Vorteil, dass alle Bauteile der Getriebe-Antriebseinheit einschließlich des Antriebs-Motors in einer Montagerichtung in ein einziges Gehäuseteil montiert werden können, bevor das erste Gehäuseteil mit einem zweiten Gehäuseteil verschlossen wird. Dadurch wird das Montageverfahren deutlich vereinfacht, so entfällt beispielsweise die Herstellung eines Poltopfs und dessen wasserdichte Anbindung an ein weiteres Gehäuseteil. Somit können die Herstellungskosten einer erfindungsgemäßen Getriebe-Antriebseinheit deutlich gesenkt werden. Durch die Verwendung zweier Kunststoff-Halbschalen, die vorzugsweise mittels Spritzgußverfahren hergestellt sind, kann auf einen Poltopf aus Metall verzichtet werden, wodurch Kosten eingespart werden. Mittels Spritzgußverfahren können in einfacher Weise Halteelemente einstückig an die Gehäuseteile angeformt werden, die beispielsweise direkt die Lager der Anker- und/oder Schneckenwelle, sowie anderer Komponenten des Antriebsmotors (Permanentmagneten, Rückschlusselemente, Abschirmung) aufnehmen. Dadurch wird die Anzahl der verwendeten Bauteile, und damit die dabei auftretenden Toleranzen, reduziert.

Durch die in den Unteransprüchen aufgeführten Maßnahmen ergeben sich vorteilhafte Weiterbildungen und Verbesserungen der im Anspruch 1 angegebenen Merkmale. Durch die gleiche, radiale Montagerichtung des Getriebes mit der des Antriebsmotors entfällt ein zusätzlicher Prozess-Schritt, so dass das Gehäuse nicht gedreht werden muss.

In einer bevorzugten Ausgestaltung besteht das Gehäuse aus zwei Schalen, die näherungsweise symmetrisch zur Ankerwelle, oder als Topf mit Deckel ausgeführt sein können. Das komplette Gehäuse besteht hierbei lediglich aus zwei Gehäuseteilen, wodurch die Teilevielzahl reduziert wird.

Damit der Antriebsmotor nicht in einem Poltopf vormontiert werden muss, können die einzelnen Komponenten des Motors, wie die Permanentmagnete, Rückschlusselemente oder eine optionale elektromagnetische Abschirmung direkt von der einen Schale gehalten werden. Hierzu können an einer der Schalen Geometrien angeformt werden, die die einzelnen Komponenten und Lager des Antriebsmotors aufnehmen. Dadurch entfällt die separate Montage des Antriebsmotors im Poltopf.

Wird die Ankerwelle über deren gesamten Länge bei deren montage in einem einzigen Gehäuseteil aufgenommen, so müssen zu deren Lagerung keine zwei Gehäuseteile, wie Getriebegehäuse und Poltopf, exakt zueinander justiert werden. Alle Lager der Ankerwelle können vorteilhaft in einem einzigen Gehäuseteil positionsgenau zueinander angeordnet werden.

Durch die Montage aller Bauteile innerhalb eines Gehäuseteils, kann dieses zusammen mit dem entsprechenden Deckel symmetrisch zu einer Ebene, die durch die Abtriebsachse und den Schwerpunkt des Antriebsmotors verläuft, geformt sein. Durch solch eine Symmetrie können Schwingungsgeräusche der Getriebeantriebseinheit reduziert werden
und das identische Gehäuse beispielsweise für den Einbau in der linken, als auch in der rechten Tür für die Verwendung bei einem Fensterheberantrieb eingebaut werden. Dadurch ist für alle Fensterheber in einem Kraftfahrzeug nur ein Typ einer Antriebseinheit notwendig.

Werden die beiden Halbschalen senkrecht zur Ankerwelle miteinander verbunden, um das Gehäuse zu schließen, kann zwischen den beiden Halbschalen eine Dichtung angeordnet werden, die komplett in einer Dichtebene liegt. Dies vereinfacht die Fertigung, beispielsweise das Anspritzen, eines Dichtelements und erhöht die Dichtigkeit der Antriebseinheit.

Besonders günstig ist es, die Komponenten und Bauteile des Antriebsmotors und des Getriebes bei der Montage zuerst in einem einzigen Gehäuseteil zu lagern, und diese dann mit dem zweiten Gehäusebauteil räumlich fest zu fixieren. In einem solchen Gehäuse kann günstigerweise ein Getriebe mit mehreren Getriebestufen angeordnet werden, um das für die jeweilige Anwendung benötigte Drehmoment zur Verfügung zu stellen. Durch die separate Ausführung einer Schneckenwelle, räumlich versetzt zur Ankerwelle, kann hierbei die Baulänge der Getriebe-Antriebseinheit axial zur Ankerwelle deutlich reduziert werden, wodurch das Gehäuse universeller verbaut werden kann.

### Zeichnungen

In der Zeichnung sind verschiedene Ausführungsbeispiele einer erfindungsgemäßen Vorrichtung dargestellt und in der nachfolgenden Beschreibung näher erläutert.

Es zeigen
- Figur 1 und 2: eine perspektivische Darstellung einer erfindungsgemäßen geöffneten Getriebe-Antriebseinheit im Montagezustand,
- Figur 3 und 4: Drauf- und Seitenansicht einer weiteren erfindungsgemäßen Getriebe-Antriebseinheit ohne zweite Halbschale,
- Figur 5: eine Ansicht einer weiteren Getriebe-Antriebseinheit mit mehrstufigem Getriebe ohne Deckel und
- Figur 6: eine perspektivische Darstellung eines weiteren Auführungsbeispiels mit separater Schneckenwelle.

### Beschreibung der Ausführungsbeispiele

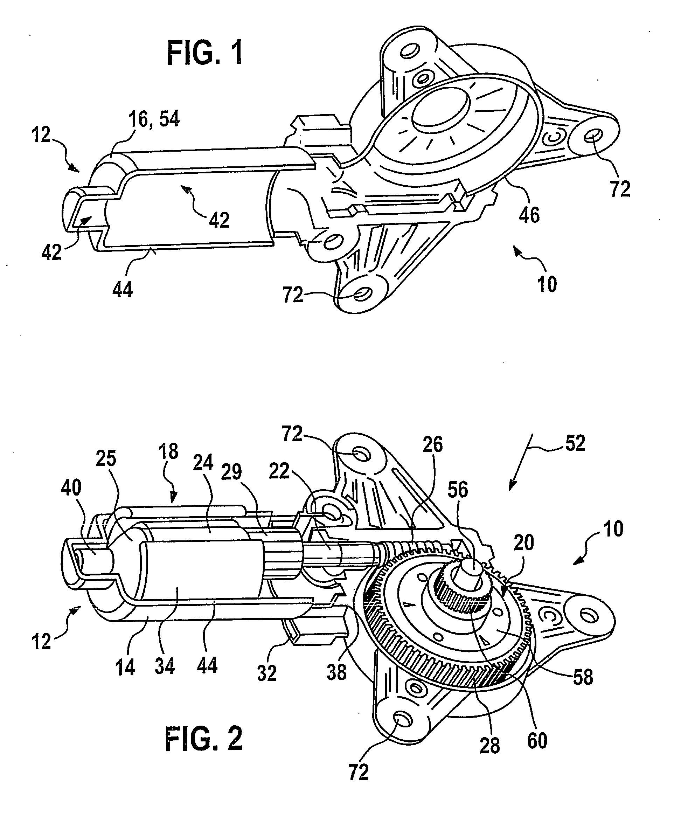

In Figur 1 und 2 ist eine Getriebe-Antriebseinheit 10 mit einem mehrteiligen Gehäuse 12 dargstellt, das im Wesentlichen aus einer ersten Halbschale 14 und einer zweiten Halbschale 16 besteht. Bei der Montage der Getriebe-Antriebseinheit 10 wird in dem ersten Gehäuseteil 14 ein Antriebsmotor 18 und ein Getriebe 20 angeordnet. Der Antriebsmotor 18 weist eine Ankerwelle 22 mit einem Anker 24 und einer Schnecke 26 auf, die mit einem Schneckenrad 28 des Getriebes 20 zusammenwirkt. Zwischen der Schnecke 26 und dem Anker 24 ist ein Kollektor 29 angeordnet, der mit einem hier noch nicht montierten Bürstenhalter 30 zusammenwirkt, der eine elektrisch leitende Verbindung zu einem Steckerteil 32 des ersten Gehäuseteils 14 aufweist. Als weitere Komponenten weist der Antriebsmotor 18 Permanentmagnete 34 auf, die bei der Montage direkt im ersten Gehäuseteil 14 gelagert werden. Da das Gehäuseteil 14 und ein weiteres zweites Gehäuseteil 16, das das Gehäuse 20 verschließt, im Spritzgußverfahren aus Kunststoff hergestellt sind, wird bei der Montage des Antriebsmotors 18 desweiteren ein oder mehrere Rückschlusselemente 36 im ersten Gehäuseteil 14 montiert, die an Stelle eines Metall-Poltopfes die Funktion der magnetischen Kopplung der Permanentmagnete 34 übernehmen. Zur Lagerung der einzelnen Komponenten des Antriebsmotors 18, wie die Ankerwelle 22, die Permanentmagnete 34 oder das Rückschlusselement 36, sind im ersten Gehäuseteil 14 Haltelemente 38 angeformt, die die einzelnen Komponenten des Antriebsmotors 18 aufnehmen. Im Ausführungsbeispiel sind diese Halteelemente 38 als einstückige Ausformungen mit dem Gehäuseteil 14 mittels dem Spritzgussverfahren angeformt. Zur Lagerung der Ankerwelle 22 werden vor deren Montage zuerst Ankerlager 40, beispielsweise Gleit- oder Kugellager, angeordnet, die dann bei der Montage der Ankerwelle 22 von den Halteelementen 38 aufgenommen werden. Die verschiedenen Halteelemente 38 für die Komponenten des Antriebsmotors 18, sowie für die Bauteile des Getriebes 20 können sehr maßgenau zueinander angeformt werden, da sie alle in einem einzigen Prozess-Schritt an dem einteiligen Gehäuseteil 14 ausgebildet werden. Zur räumlichen Fixierung der Komponenten des Antriebsmotors 18 (Lager 40, Permanentmagnete 34, Rückschlusselemente 36) weist das zweite Gehäuseteil 16 korrespondierende Gegenelemente 42 auf, die beim Schließen des Gehäuses 12 mittels des zweiten Gehäuseteils 16 die Komponenten des Antriebsmotors 18 räumlich fixieren und ein Verschieben oder Loslösen im Betrieb verhindern. Nach dem Schließen des Gehäuses 12 wird der gesamte Antriebsmotor 18 von den beiden Halbschalen 14, 16 umschlossen. Zwischen den beiden Halbschalen 14 und 16 ist eine Dichtfläche 44 näherungsweise parallel zur Ankerwelle 22 angeordnet, die das Gehäuse 20 wasserdicht abdichtet. Dazu ist an der Dichtfläche 44 elastisches Dichtmaterial 46 angespritzt oder alternativ eine separate Dichtung 48 zwischen den beiden Gehäuseteilen 14 und 16 angeordnet. Die beiden Gehäuseteile 14 und 16 werden mit entsprechendem Anpressdruck, beispielsweise mit Rastelementen, Schrauben oder sonstigen Verbindungselementen 50 fest miteinander verbunden. Bei der Montage der Getriebe-Antriebseinheit 10 werden alle Komponenten des Antriebsmotors 18, sowie alle Bauteile des Getriebes 20 in der selben Montagerichtung 52 radial zur Ankerwelle 22 in ein einziges Gehäuseteil 14 eingefügt. Nach der vollständigen Bestückung des ersten Bauteils 14 und Lagerung der einzelnen Komponenten wird das zweite Gehäuseteil 16, das hier in etwa spiegelsymmetrisch zur Ankerwelle 22 ausgebildet ist, als Deckel 54 montiert, der die einzelnen Komponenten und Bauteile räumlich fixiert und das Gehäuse 12 abdichtet. Das Getriebe 20 ist hierbei als Schneckengetriebe ausgebildet, dessen Schneckenrad 28 auf einer gehäusefesten Achse 56 gelagert ist, die beispielsweise als Einlegeteil beim Spritzgußverfahern eingefügt wird. Das Schneckenrad 28 wirkt mit einem elastisch gelagerten Mitnehmer 58 zusammen, an den ein Abtriebselement 60, beispielsweise ein Ritzel zum Antrieb eines Fensterhebers, angeformt ist.

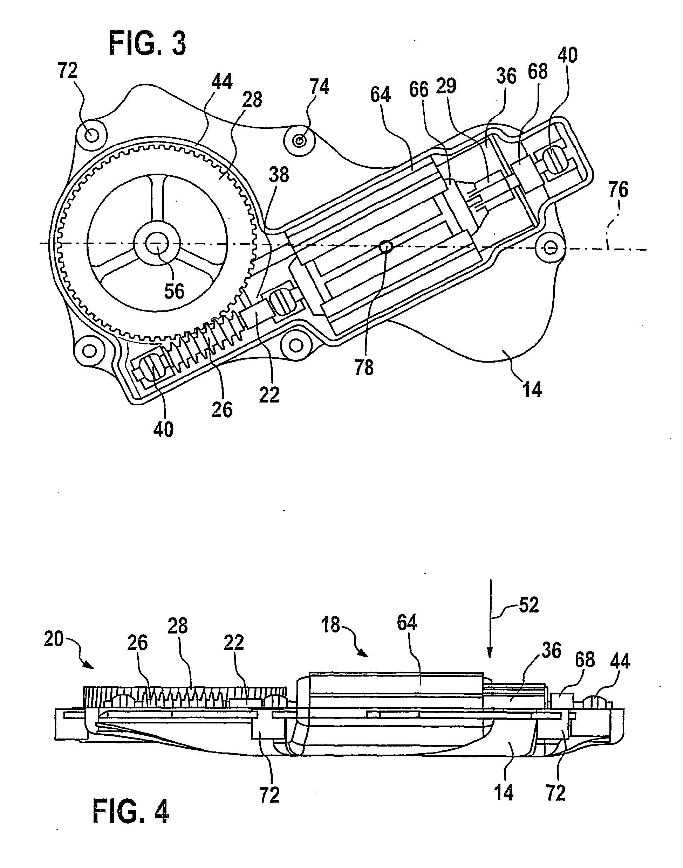

In Figur 3 und 4 ist eine weitere Ausführungsform einer Getriebe-Antriebseinheit 10 abgebildet, wobei das Gehäuse 12 ebenfalls eine erste und zweite Halbschale 14, 16 aufweist. Aus Figur 4 ist ersichtlich, dass das Getriebe 20 und der vollständige Antriebsmotor 18 komplett von der ersten Halbschale 14 aufgenommen und nach der Montage des nicht näher dargestellten, im Wesentlichen spiegelsymmetrischen Deckels 16, vollständig umfasst wird. Die Ankerwelle 22 ist hier beispielsweise mittels drei Kugellagern 40 über deren gesamte Länge 62 in der ersten Halbschale 14 gelagert und durch das Zusammenfügen mit der als Deckel 54 ausgebildeten zweiten Halbschale 16 räumlich befestigt. Zusätzlich zu den Permanentmagneten 34 und dem Rückschlusselement 36 ist hier eine elektromagnetische Abschirmung 64 in das Gehäuseteil 14 eingefügt, um die feldgebundene Abstrahlung der Permanentmagneten 34, sowie der induzierten Felder der Wicklungen 25 zu minimieren. Der Kollektor 29 ist hierbei am von der Schnecke 26 abgewandten Ende 66 des Ankers 24 angeordnet. Auf der gleichen Seite 66 ist auf der Ankerwelle 22 ein Ringmagnet 68 für eine Positionserfassung angeordnet, der mit einem magnetischen Sensor 70, beispielsweise Hall-Elemente, zusammenwirkt. Wie in Figur 3 dargestellt, ist das Gehäuse 12 derart ausgeformt, dass Aufnahmen 72 für Verbindungselemente 74 mit der Karosserie symmetrisch zu einer Geraden 76 angeordnet sind, die sowohl durch die Drehachse 56 des Schneckenrads 28, als auch durch den Masseschwerpunkt 78 des Antriebsmotors 18 verläuft. Durch solch eine symmetrische Anordnung des Masseschwerpunkts 78 zu den Aufnahmen 72 werden unerwünschte Schwingungen unterbunden, und dadurch die Geräuschbelästigung des Antriebs reduziert. Die Aufnahmen 72 sind dabei so angeordnet, dass eine solche Getriebe-Antriebseinheit 10 bei einem identischen Bauraumvolumen sowohl in einer linken, als auch in einer rechten Fahrzeugtür zur Betätigung eines Fensterhebers eingebaut werden kann.

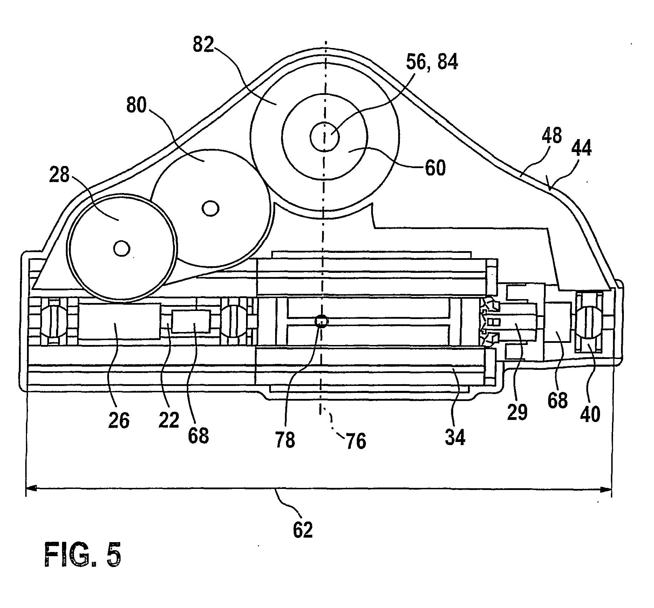

Figur 5 zeigt eine weitere Form eines ersten Gehäuseteils 14, das sowohl den vollständigen Antriebsmotor 18, als auch das Getriebe 20 aufnimmt, das hier mehrstufig ausgebildet ist. Das Antriebsmoment wird hier über die Schnecke 26 auf das Schneckenrad 28 übertragen, dessen zweiter, nicht sichtbarer Zahnkranz mit einem weiteren Zahnrad 80 kämmt. Durch eine weitere Getriebestufe auf ein drittes Zahnrad 82, das auf einer dritten, als Drehachse 56 ausgebildeten Achse 84 gelagert ist, steht das Abtriebsmoment am Abtriebselement 60 zur Verfügung. Der Masseschwerpunkt 78 des Antriebsmotors 18 liegt wiederum auf einer Geraden 76, die durch die Drehachse 56 verläuft, und zu der die Grundfläche des Gehäuseteils 14 symmetrisch ausgeformt ist. Bei dieser Ausführung ist das erste Gehäuseteil 14 in Montagerichtung nicht symmetrisch zu einem zweiten, nicht dargestellten Gehäuseteil 16 ausgebildet. Vielmehr bildet die untere Schale 14 einen höheren Topf, in dem alle Bauteile des Getriebes 20 und die Komponenten des Antriebsmotors 18 mittels Halteelementen 38 räumlich fest fixiert werden, und das zweite Gehäuseteil 16 als Deckel 54 ausgebildet ist, der das Gehäuse 12 wasserdicht abschließt. Bei der Montage werden hierbei die elektromagnetische Abschirmung 64, das Rückschlusselement 36, sowie die Permanentmagnete 34 direkt in das erste Gehäuseteil 14 integriert.

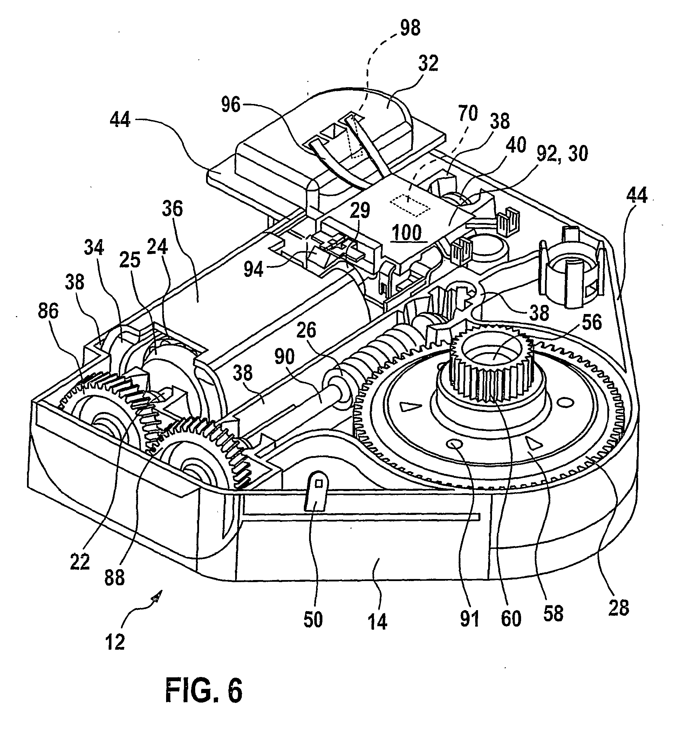

In Figur 6 ist eine weitere Ausführungsform einer erfindungsgemäßen Getriebe-Antriebseinheit 10 dargestellt, bei dem das Drehmoment über ein auf der Ankerwelle 22 angeordnetes Getriebeelement 86 auf ein korrespondierendes Getriebeelement 88 einer separaten Schneckenwelle 90 übertragen wird. Auf der Schneckenwelle 90 ist wiederum eine Schnecke 26 drehfest fixiert, die mit einem Schneckenrad 28 kämmt. Innerhalb des Schneckenrads 28 sind nicht näher dargestellte Dämpfungsmittel 91 angeordnet, die das Drehmoment auf ein Abtriebsritzel 60 übertragen, das gemeinsam mit dem Schneckenrad 28 auf einer Drehachse 56 gelagert ist. Durch die separate Ausbildung der Schneckenwelle 90, die räumlich neben dem Antriebsmotor 18 angeordnet ist, reduziert sich die axiale Länge 62 der Ankerwelle 22 des Antriebsmotors 18 und damit der gesamten Getriebe-Antriebseinheit 10. Das Gehäuse 12 ist wiederum im Wesentlichen symmetrisch zu einer Geraden 76 durch den Schwerpunkt 78 des Antriebsmotors 18 und durch die Drehachse 56 ausgebildet. Alle Bauelemente des Getriebes 20 und der gesamte Antriebsmotor 18 werden bei der Montage wieder von einer Gehäuseschale 14 aufgenommen, an das Halteelemente 38 angeformt sind, die die Kugellager 40 der separaten Schneckenwelle 90, sowie der Ankerwelle 22 aufnehmen. Ebenso werden alle weiteren Komponenten des Antriebsmotors 18 radial zur Ankerwelle in gleicher Montagerichtung 52 mit den Getriebebauteilen montiert. Radial zur Ankerwelle 22 ist ebenfalls mittels Halteelementen 38 ein Bürstenhalterelement 92 zur Aufnahme von Bürsten 94 angeordnet. Das Bürstenhalterelement 92 weist ebenfalls einen magnetischen Sensor 70 auf, der mit einem Ringmagneten 68 zur Drehzahlerfassung des Antriebs, bzw. zur Positionserfassung des zu verstellenden Teils zusammenwirkt. Die elektrische Verbindung 96 der Bürsten 94 und des Magneten 72 sind hier als Stanzgitter 96 ausgebildet, dessen Kontaktfahnen 98 das Steckerteil 32 durchdringen. Die obere Stirnseite des Gehäuseteils 14 bildet eine Dichtfläche 44, die in etwa in einer Ebene zur Ankerwelle 22 angeordnet ist, und auch das Steckerteil 32 umschließt. Das nicht dargestellte zweite Gehäuseteil 16, das hierbei deutlich flacher ausgebildet ist, als das erste Gehäuseteil 14, wird beispielsweise mittels schamatisch dargestellten Rastmitteln 50 verbunden, und weist Gegenelemente 42 zur exakten räumlichen Justierung und Fixierung bestimmter Komponenten, wie beispielsweise das Bürstenhalterelement 92, das Rückschlusselement 36 oder die magnetische Abschirmung 64 auf. Völlig unabhängig von der konkreten Ausformung des Gehäuses 12 kann durch die Ausbildung einer separaten Schneckenwelle 90, die mit der Ankerwelle 22 gekoppelt ist, die Baulänge der Getriebe-Antriebseinheit 10 reduziert werden, insbesondere, wenn die separate Schneckenwelle 90 in etwa parallel neben der Ankerwelle 22 angeordnet ist.

Es sei angemerkt, dass hinsichtlich der in allen Figuren gezeigten Ausführungsbeispiele vielfältige Kombinationsmöglichkeiten der einzelnen Merkmale untereinander möglich sind. So kann die konkrete Ausgestaltung des Getriebes 20 und des Antriebsmotors 18 variiert werden, solange dies mit dem erfindungsgemäßen Montagekonzept des Gehäuses 12 vereinbar ist. So ist die Erfindung sowohl auf Antriebsmotoren 18 mit Bürstenhalter 92, als auch auf elektronisch kommutierte BLDC-Motoren anwendbar. Dabei kann ein Elektronikmodul 100 auch innerhalb des Gehäuses 12 beispielsweise als Bestandteil des Bürstenhalterelements 92 angeordnet sein. Auch ist die Ausführung der Dichtung 44, 48, der Verbindungsteile 50 zwischen den Gehäuseteilen 14, 16 , sowie die Art der Aufnahmen 72 nicht auf die beschriebenen Beispiele beschränkt. Des Weiteren kann das Gehäuse 12 auch ein drittes oder weiteres Gehäuseteil aufweisen, solange alle wesentlichen Komponenten und Bauteile des Antriebsmotors 18 und des Getriebes 20 von einer ersten Gehäuseschale 14 bei deren Montage aufgenommen werden. Bevorzugt wird die erfindungsgemäße Getriebe-Antriebseinheit 10 für die Betätigung von Fensterhebern oder für die Verstellung beweglicher Teile im Kraftfahrzeug, wie Schiebedächer oder Sitzteile, verwendet.

## Patentansprüche

1. Getriebe-Antriebseinheit (10) mit einem mehrteiligen Gehäuse (12), einem eine Ankerwelle (22), einen Anker (24) und Permanentmagneten (34) aufweisenden elektrischen Antriebsmotor (18) und einem diesem nachgeordneten Getriebe (20), insbesondere Schneckengetriebe, das mit dem Antriebsmotor (18) über die Ankerwelle (22) wirkverbunden ist, wobei das Gehäuse aus zwei Halbschalen besteht, die radial zur Ankerwelle zusammenfügbar sind und den gesamten Antriebsmotor umschließen, wobei der Antriebsmotor (18) radial zur Ankerwelle (22) in eine erste Gehäuseschale (14) montierbar ist, und bei der Montage allein von der ersten Gehäuseschale (14) aufgenommen wird, **dadurch gekennzeichnet, dass** beide Gehäuseschalen (14, 16) einschließlich einteilig daran angeformter Halteelemente (38) als Kunststoff-Spritzguss-Teile gefertigt sind und innerhalb der Gehäuseschalen (14, 16) ein oder mehrere Rückschlusselemente (36) zur magnetischen Kopplung der Permanentmagnete (18) angeordnet sind, wobei das mindestens eine Rückschlusselement (36) durch die Halteelemente (38) in der ersten Gehäuseschale (14) gelagert und/oder fixiert und durch Gegenelemente (42) der zweiten Gehäuseschale (16) beim Verschließen mittels der zweiten Gehäuseschale (16) räumlich exakt justiert und fixiert wird.

2. Getriebe-Antriebseinheit (10) nach Anspruch 1, **dadurch gekennzeichnet, dass** das Getriebe (20) bei der Montage in gleicher Montagerichtung (52) und in dasselbe Gehäuseteil (14) wie der Antriebsmotor (18) eingefügt wird.

3. Getriebe-Antriebseinheit (10) nach einem der Ansprüche 1 oder 2, **dadurch gekennzeichnet, dass** einzelne Komponenten des Antriebmotors (18), wie beispielsweise Permanentmagnete (34), Rückschlusselemente (36) oder eine elektromagnetische Abschirmung (64), direkt in eine der Gehäuseteile (14, 16) integriert sind.

4. Getriebe-Antriebseinheit (10) nach einem der vorhergehenden Ansprüche, **dadurch gekennzeichnet, dass** an die Halbschalen (14, 16) Halteelemente (38) angeformt sind, die die Komponenten (34, 36, 64, 22, 40) des Antriebmotors (18) lagern und/oder fixieren.

5. Getriebe-Antriebseinheit (10) nach einem der vorhergehenden Ansprüche, **dadurch gekennzeichnet, dass** die Ankerwelle (22) über deren gesamte Länge (62) in mindestens einer der beiden Gehäuseteile (14, 16) gelagert ist.

6. Getriebe-Antriebseinheit (10) nach einem der vorhergehenden Ansprüche, **dadurch gekennzeichnet, dass** das Gehäuse (12) symmetrisch ausgebildet ist, derart, dass die identische Antriebseinheit (10) in einer linken und einer rechten Einbauposition (Tür) eines Fensterhebers einbaubar ist.

7. Getriebe-Antriebseinheit (10) nach einem der vorhergehenden Ansprüche, **dadurch gekennzeichnet, dass** zwischen den Gehäuseteilen (14, 16) nur eine - insbesondere wasserdichte - Dichtfläche (44) in einer Ebene in etwa parallel zur Ankerwelle (22) angeordnet ist.

8. Getriebe-Antriebseinheit (10) nach einem der vorhergehenden Ansprüche, **dadurch gekennzeichnet, dass** die Komponenten des Antriebmotors (18) bei der Montage in eines der Gehäuseteile (14, 16) eingefügt werden und beim Verschließen mittels des zweiten Gehäuseteils (16, 14) - insbesondere mit angeformten Gegenelementen (42) - fixiert werden.

9. Getriebe-Antriebseinheit (10) nach einem der vorhergehenden Ansprüche, **dadurch gekennzeichnet, dass** das Getriebe (20) mehrere Getriebestufen (80, 82) aufweist.

10. Getriebe-Antriebseinheit (10) nach einem der vorhergehenden Ansprüche, **dadurch gekennzeichnet, dass** das Getriebe (20) zusätzlich zur Ankerwelle (22) eine separate Schneckenwelle (90) aufweist, die insbesondere näherungsweise parallel versetzt zur Ankerwelle (22) angeordnet ist.

## Claims

1. Gear drive unit (10), with a multi-part housing (12), with an electric drive motor (18) having an armature shaft (22), an armature (24) and permanent magnets (34) and with a gear (20), in particular worm gear, which follows the said drive motor and which is operatively connected to the drive motor (18) via the armature shaft (22), the housing consisting of two half-shells which can be joined together radially with respect to the armature shaft and surround the entire drive motor, the drive motor (18) being mountable radially with respect to the armature shaft (22) into a first housing shell (14) and, during mounting, being received solely by the first housing shell (14), **characterized in that** the two housing shells (14, 16), including holding elements (38) formed in one piece on them, are manufactured as plastic injection mouldings, and one or more return elements (36) for the magnetic coupling of the permanent magnets (18) are arranged within the housing shells (14, 16), the at least one return element (36) being mounted and/or fixed in the first housing shell (14) by means of the holding elements (38) and, during closing by means of the second housing shell (16), being exactly adjusted spatially and fixed by means of counter elements (42) of the second housing shell (16).

2. Gear drive unit (10) according to Claim 1, **characterized in that**, during mounting, the gear (20) is inserted in the same mounting direction (52) and into the same housing part (14) as the drive motor (18).

3. Gear drive unit (10) according to either one of Claims 1 or 2, **characterized in that** individual components for the drive motor (18), such as, for example, permanent magnets (34), return elements (36) or electromagnetic shielding (64), are integrated directly into one of the housing parts (14, 16).

4. Gear drive unit (10) according to one of the preceding claims, **characterized in that** holding elements (38) are formed onto the half-shells (14, 16) and mount and/or fix the components (34, 36, 64, 22, 40) of the drive motor (18).

5. Gear drive unit (10) according to one of the preceding claims, **characterized in that** the armature shaft (22) is mounted over its entire length (62) in at least one of the two housing parts (14, 16).

6. Gear drive unit (10) according to one of the preceding claims, **characterized in that** the housing (12) is designed symmetrically in such a way that the identical drive unit (10) can be installed in a lefthand and a right-hand installation position (door) of a window lifter.

7. Gear drive unit (10) according to one of the preceding claims, **characterized in that** only one, in particular water-tight, sealing surface (44) is arranged in a plane approximately parallel to the armature shaft (22) between the housing parts (14, 16).

8. Gear drive unit (10) according to one of the preceding claims, **characterized in that**, during mounting, the components of the drive motor (18) are inserted into one of the housing parts (14, 16), and, during closing by means of the second housing part (16, 14), are fixed, in particular by means of formed-on counter elements (42).

9. Gear drive unit (10) according to one of the preceding claims, **characterized in that** the gear (20) has a plurality of gear stages (80, 82).

10. Gear drive unit (10) according to one of the preceding claims, **characterized in that** the gear (20) has, in addition to the armature shaft (22), a separate worm shaft (90) which, in particular, is arranged approximately parallel to the armature shaft (22) and so as to be offset with respect to the latter.

## Revendications

1. Unité d'entraînement de transmission (10) comprenant un boîtier (12) en plusieurs parties, un moteur d'entraînement électrique (18) présentant un arbre d'induit (22), un induit (24) et des aimants permanents (34) et une transmission (20) placée après le moteur, en particulier une transmission à vis sans fin, qui est connectée fonctionnellement au moteur d'entraînement (18) par le biais de l'arbre d'induit (22), le boîtier se composant de deux demi-coques, qui peuvent être assemblées radialement par rapport à l'arbre d'induit et qui entourent l'ensemble du moteur d'entraînement, le moteur d'entraînement (18) pouvant être monté radialement par rapport à l'arbre d'induit (22) dans une première coque de boîtier (14), et, lors du montage, étant reçu uniquement par la première coque de boîtier (14), **caractérisée en ce que** les deux coques de boîtier (14, 16) sont fabriquées sous forme de pièces moulées par injection de plastique avec des éléments de fixation (38) moulés d'une seule pièce sur celles-ci et **en ce qu'**à l'intérieur des coques de boîtier (14, 16) sont disposés un ou plusieurs éléments de culasse (36) pour l'accouplement magnétique des aimants permanents (18), l'au moins un élément de culasse (36) étant monté et/ou fixé par les éléments de fixation (38) dans la première coque de boîtier (14) et étant ajusté exactement spatialement et fixé par des éléments conjugués (42) de la deuxième coque de boîtier (16) lors de la fermeture au moyen de la deuxième coque de boîtier (16).

2. Unité d'entraînement de transmission (10) selon la revendication 1, **caractérisée en ce que** la transmission (20) lors du montage est insérée dans la même direction de montage (52) et dans la même partie de boîtier (14) que le moteur d'entraînement (18).

3. Unité d'entraînement de transmission (10) selon l'une quelconque des revendications 1 ou 2, **caractérisée en ce que** des composants individuels du moteur d'entraînement (18), comme par exemple des aimants permanents (34), des éléments de culasse (36) ou un blindage électromagnétique (64) sont intégrés directement dans l'une des parties de boîtier (14, 16).

4. Unité d'entraînement de transmission (10) selon l'une quelconque des revendications précédentes, **caractérisée en ce que** des éléments de fixation (38) sont moulés sur les demi-coques (14, 16), lesquels supportent et/ou fixent les composants (34, 36, 64, 22, 40) du moteur d'entraînement (18).

5. Unité d'entraînement de transmission (10) selon l'une quelconque des revendications précédentes, **caractérisée en ce que** l'arbre d'induit (22) est supporté sur toute sa longueur (62) dans au moins l'une des deux parties de boîtier (14, 16).

6. Unité d'entraînement de transmission (10) selon l'une quelconque des revendications précédentes, **caractérisée en ce que** le boîtier (12) est réalisé de manière symétrique de telle sorte que l'unité d'entraînement identique (10) puisse être installée dans une position de montage gauche et une position de montage droite (porte) d'un lève-glace.

7. Unité d'entraînement de transmission (10) selon l'une quelconque des revendications précédentes, **caractérisée en ce qu'**entre les parties de boîtier (14, 16) n'est disposée qu'une surface d'étanchéité (44) - notamment imperméable à l'eau - dans un plan approximativement parallèle à l'arbre d'induit (22).

8. Unité d'entraînement de transmission (10) selon l'une quelconque des revendications précédentes, **caractérisée en ce que** les composants du moteur d'entraînement (18) sont insérés lors du montage dans l'une des parties de boîtier (14, 16) et, lors de la fermeture, sont fixés au moyen de la deuxième partie de boîtier (16, 14) - notamment avec des éléments conjugués moulés (42).

9. Unité d'entraînement de transmission (10) selon l'une quelconque des revendications précédentes, **caractérisée en ce que** la transmission (20) présente plusieurs rapports de transmission (80, 82).

10. Unité d'entraînement de transmission (10) selon l'une quelconque des revendications précédentes, **caractérisée en ce que** la transmission (20) présente en plus de l'arbre d'induit (22) un arbre de vis sans fin séparé (90) qui est notamment disposé approximativement parallèlement et de manière décalée par rapport à l'arbre d'induit (22).
